Europäisches Patentamt

European Patent Office

Office européen des brevets

(19)

(11) Veröffentlichungsnummer: **0 319 656 B1**

(12) **EUROPÄISCHE PATENTSCHRIFT**

(45) Veröffentlichungstag der Patentschrift: **08.04.92**

(51) Int. Cl.⁵: **F16M 11/10**, G06F 1/00

(21) Anmeldenummer: **88114549.4**

(22) Anmeldetag: **07.09.88**

(54) **Stütz- und Tragbügel für Bildschirmgeräte.**

(30) Priorität: **10.12.87 DE 3741787**

(43) Veröffentlichungstag der Anmeldung:
**14.06.89 Patentblatt 89/24**

(45) Bekanntmachung des Hinweises auf die
Patenterteilung:
**08.04.92 Patentblatt 92/15**

(84) Benannte Vertragsstaaten:
**AT BE ES IT NL**

(56) Entgegenhaltungen:
**CH-A- 659 036**     **DE-A- 3 217 431**
**FR-A- 2 363 267**    **US-A- 3 155 362**
**US-A- 4 471 931**    **US-A- 4 524 940**
**US-A- 4 669 694**

(73) Patentinhaber: **TELENORMA GMBH**
**Mainzer Landstrasse 128-146**
**W-6000 Frankfurt/Main(DE)**

(72) Erfinder: **Burkhard, Helfrich, Dipl.-Ing.(FH)**
**Erlenstrasse 1**
**W-6845 Gross Rohrheim(DE)**

Rank Xerox (UK) Business Services

## Beschreibung

Die Erfindung betrifft einen Stütz- und Tragbügel für Bildschirmgeräte nach dem Oberbegriff des Patentanspruchs 1.

Aus der DE-OS 32 17 431 ist es bei einer Anordnung der Apparaturen an einem Bildschirm-Arbeitsplatz bekannt, das Bildschirmgerät mit einer besonderen Vorrichtung zu kombinieren, um die günstigste Arbeitsposition für den Benutzer einstellen zu können. Das Bildschirmgerät kann dabei in jede Position gedreht werden, und die Anzeigefläche kann in ihrem Neigungswinkel ebenfalls optimal eingestellt werden. Die dazu notwendige Vorrichtung ist jedoch relativ aufwendig und beeinflußt wesentlich die Größe der gesamten Anordnung. Durch die besondere Formgebung und das nicht zu vernachlässigende Gewicht ist eine solche Anordnung nur schwer zu transportieren.

Aus der Schrift FR-U-2 363 267 ist ein Bügel für ein Projektionsgerät bekannt, der zum Einstellen der Neigung und zum Tragen des Gerätes dient. Dieser Bügel ist an der Vorderseite des Gerätes angebracht und in diesem schwenkbar gelagert. Dabei sind mehrere Positionen möglich, in denen der Bügel durch einen drehbaren Arretierhebel fixiert werden kann. Eine der Positionen dient zum Tragen des Gerätes. Der Bügel ist als geschlossener rechteckiger Ring ausgeführt und beim Betrieb des Gerätes an der Vorderseite sichtbar.

Eine derartige Anordnung mag für ein Projektionsgerät geeignet sein, ist aber für ein Bildschirmgerät nicht praktisch, weil ein Benutzer vor dem Gerät möglichst viel freie Fläche benötigt. Außerdem sind erhebliche konstruktive Vorleistungen in Form von Anpassungen an der Gehäuseoberfläche für die Anbringung eines derartigen Bügels erforderlich.

Die Aufgabe der Erfindung besteht darin, die Anordnung eines Stütz- und Tragbügels für ein Bildschirmgerät so vorzusehen, daß eine relativ leichte und unauffällige Anbringung gegeben ist und mit wenig Aufwand eine leichte Einstellung sowie ein leichter Transport des Bildschirmgerätes ermöglicht wird.

Die zur Lösung dieser Aufgabe dienenden Merkmale sind im Patentanspruch 1 angegeben.

Damit wird in vorteilhafter Weise erreicht, daß ein relativ einfaches leichtes Gebilde zur Verfügung steht welches, wie später noch beschrieben wird, leicht zu handhaben ist und einen erheblichen Komfort bietet. Mit den in den Unteransprüchen angegebenen Weiterbildungen der Erfindung werden Einzelheiten der Anordnung so ausgestaltet, daß sich besondere Vorteile bei der Montage und bei der Handhabung ergeben.

Ein Ausführungsbeispiel der Erfindung wird nachfolgend anhand von Zeichnungen näher erläutert.

Es zeigt:

Fig. 1 ein schräggestelltes Bildschirmgerät mit ausgeklapptem Stütz- und Tragbügel.

Fig. 2 Ein senkrecht stehendes Bildschirmgerät mit eingeklapptem Stütz- und Tragbügel.

Fig. 3 ein senkrecht stehendes Bildschirmgerät, wobei der Stütz- und Tragbügel sich in der Transportposition befindet.

Fig. 4 eine Seitenansicht mit mehreren Positionen des Stütz- und Tragbügels.

Fig. 5 eine Schnittzeichnung der Rückansicht bei arretiertem Stütz- und Tragbügel.

Fig. 6 eine Schnittzeichnung der Rückansicht bei nicht arretiertem Stütz- und Tragbügel.

Fig. 7 eine Detail-Seitenansicht eines Achslagers.

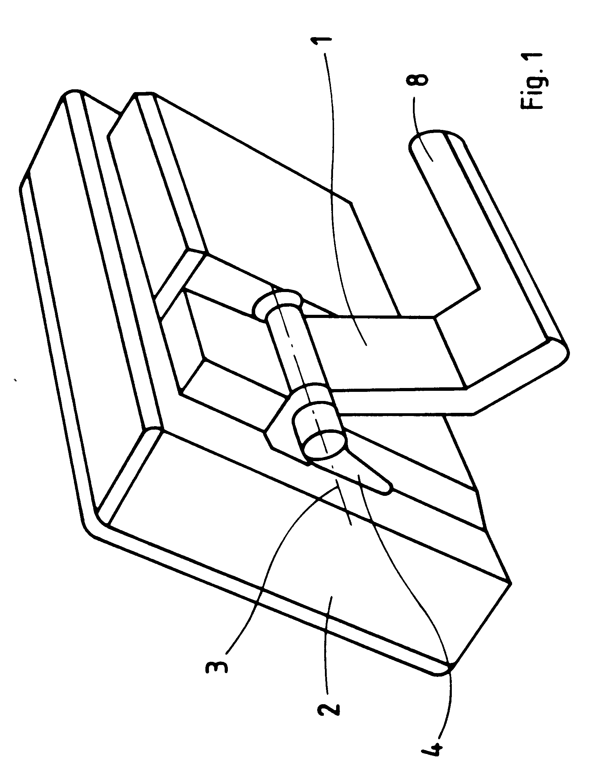

In der Fig. 1 ist ein schräggestelltes Bildschirmgerät 2 dargestellt, dessen Neigung durch den in einer Raststellung befindlichen Stütz- und Tragbügel 1 bestimmt wird. Wenn die Raststellung verändert werden soll, damit eine andere Neigung eingestellt werden kann, so ist der Arretierhebel 4 zur Vorderseite hin zu drehen, damit die Achse 3 sich nach links verschieben kann. Wie später noch beschrieben wird, kann dann der Stütz- und Tragbügel 1 in eine andere Stellung bewegt werden.

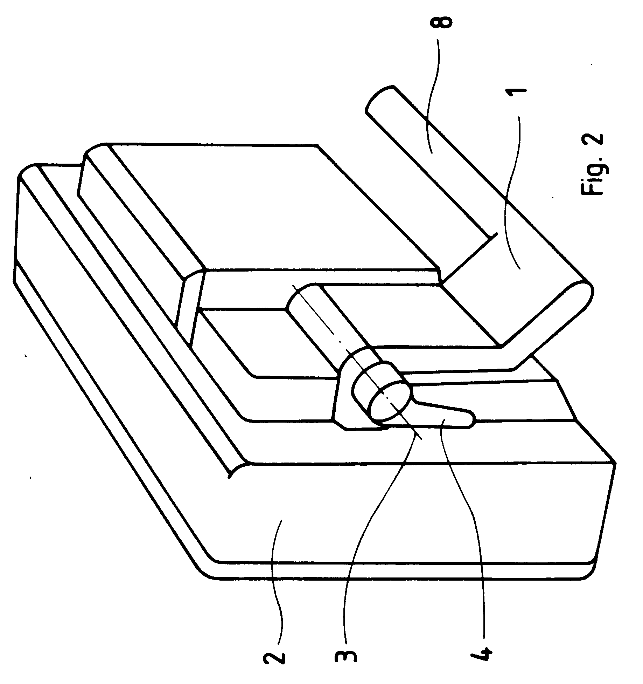

In der Fig. 2 ist ein senkrecht aufgestelltes Bildschirmgerät 2 dargestellt, wobei der Stütz- und Tragbügel 1 in einer senkrechten Endstellung arretiert ist. In dieser Lage bietet der Stütz- und Tragbügel eine zusätzliche Standfestigkeit, wodurch insbesondere bei schmal ausgeführten Bildschirmgeräten die Kippgefahr verringert wird.

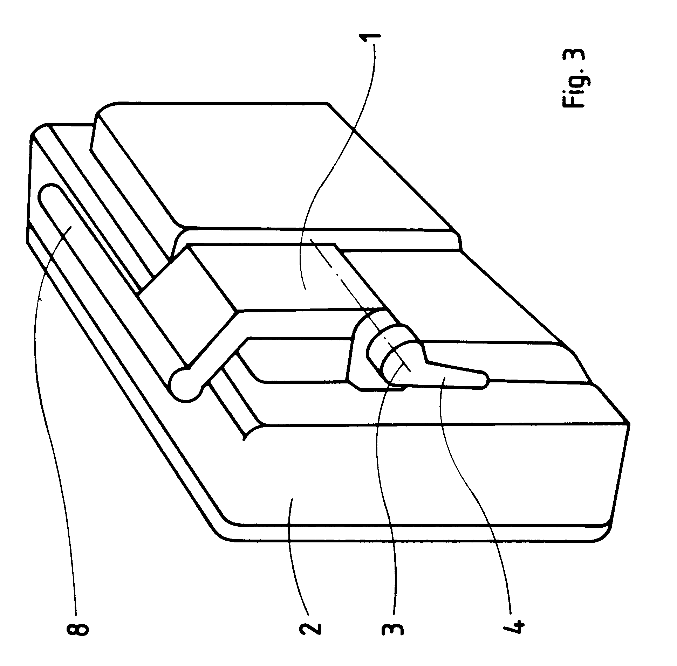

Die Fig. 3 unterscheidet sich von der Fig. 2 nur dadurch daß der Stütz- und Tragbügel 1 senkrecht nach oben geklappt ist. Auch in dieser Stellung ist der Stütz- und Tragbügel 1 arretiert, so daß eine mechanisch feste Verbindung mit dem Bildschirmgerät 2 besteht. Da der Stütz- und Tragbügel abgewinkelt ist und an seinem freien Ende einen als Griff ausgebildeten Fortsatz 8 aufweist, kann das Gerät dort bequem angefaßt und transportiert werden. Durch den abgewinkelten Hebelarm des Stütz- und Tragbügels 1 ist gewährleistet, daß sich der Schwerpunkt des Bildschirmgeräts 2 senkrecht über dem als Griff dienenden Fortsatz 8 befindet.

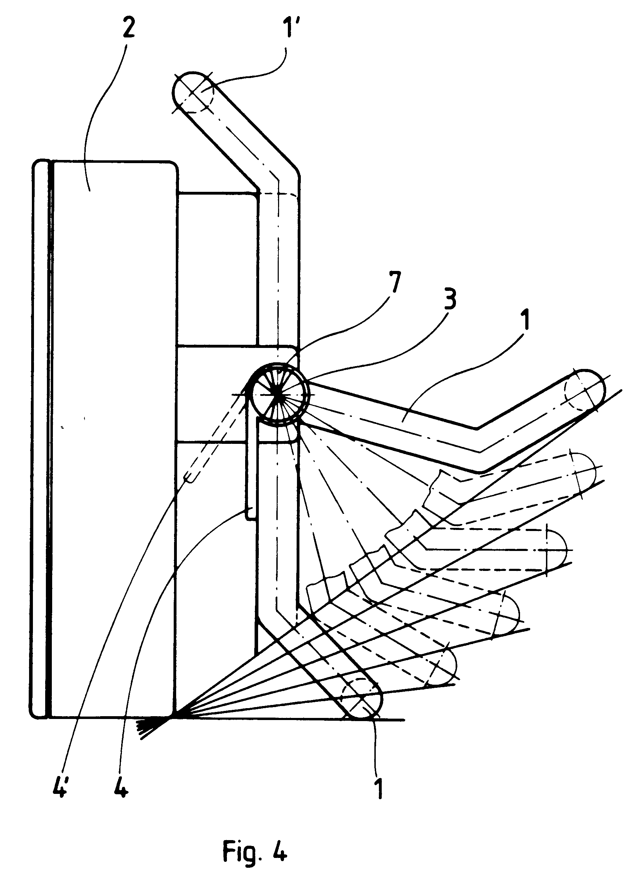

Die in der Fig. 4 dargestellte Seitenansicht zeigt, in welcher Weise sich der Stütz- und Tragbügel 1 bewegen läßt. Wenn eine Änderung der Neigung des Stütz- und Tragbügels 1 vorgenommen werden soll. so ist der Arretierhebel 4 zur Vorderseite des Bildschirmgeräts 2 hin zu bewegen, so daß er die Stellung 4' erreicht. Durch die Verschiebung der Achse 3 wird der Stütz- und Tragbügel 1 freigegeben, so daß er zu einer anderen Raststellung hin bewegt werden kann. Um den Stütz- und Tragbügel in jeweils einer Raststellung fixieren zu können, sind fächerartig angeordnete Schlitze 7 vorgesehen. Bei einer dieser Raststellungen nimmt der Stütz- und Tragbügel 1 die Position 1′ ein, die auch in der Fig. 3 dargestellt ist.

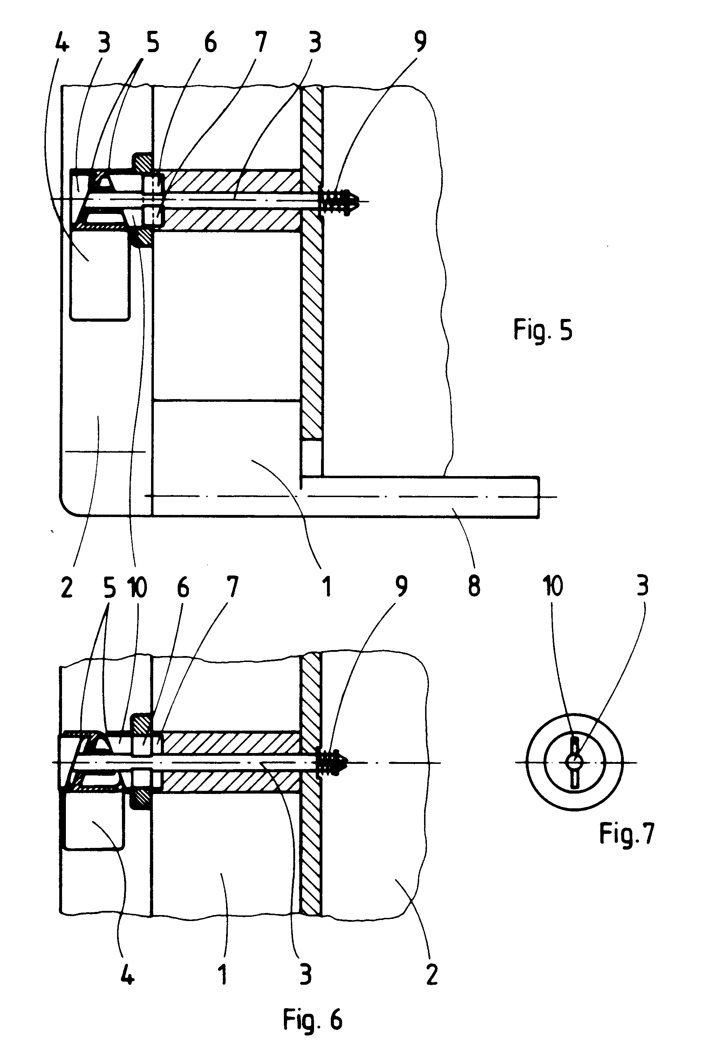

Aus den Fig. 5 bis 7 ist erkennbar, auf welche Weise die Freigabe, bzw. die Arretierung des Stütz- und Tragbügels 1 bewirkt wird. In der Fig. 5 ist der Stütz- und Tragbügel in einer arretierten Position dargestellt, wobei die Achse 3 durch eine Feder 9 so nach rechts gedrückt wird, daß eine auf der Achse 3 angebrachte Rastnase 6 in einen der Schlitze 7 hineinragt. Durch die Rastnase 6 welche auch in einen Schlitz 10 des einen Achslagers hineinragt, wird verhindert, daß sich die Achse 3 drehen kann.

Wenn der Arretierhebel 4 zur Gerätevorderseite hin bewegt, also gedreht wird, so wird durch die schiefen Ebenen 5 bewirkt, daß sich die Achse 3 nach links bewegt. Eine derartige Position ist in der Fig. 6 dargestellt. Dabei hat sich die Rastnase 6 aus einem der Schlitze 7 herausbewegt, so daß der Stütz- und Tragbügel zu einer anderen Raststellung hin bewegt werden kann. Da in dieser Position der Achse, wie sie in Fig. 6 dargestellt ist, die Feder 9 zusammengedrückt ist, wird nach dem Loslassen des Arretierhebels 4 die Achse 3 wieder nach rechts bewegt, so daß der Stütz- und Tragbügel seine neue Raststellung einnehmen kann. Bei der Bewegung der Achse 3 wird die Rastnase 6 im Schlitz 10 so geführt daß sich die Achse 3 nicht drehen kann. Durch die Anordnung von mehr als einer schiefen Ebene 5 wird erreicht, daß die Verschiebung der Achse 3 auch dann ausreichend ist, wenn der Arretierhebel 4 nur in einem relativ kleinen Winkel verdreht wird.

Der Stütz- und Tragbügel 1 für Bildschirmgeräte 2 beansprucht nur wenig Platz und läßt sich leicht anmontieren. Die Bedienung mit Hilfe des Arretierhebels 4 ist sehr einfach, weil es genügt, den Arretierhebel 4 leicht nach vorne zu ziehen, um die Arretierung vorübergehend zu lösen. Es ist zweckmäßig, das Gehäuse des Bildschirmgeräts 2 so auszugestalten, daß die Lager für die Achse 3 Bestandteil des Gehäuses sind. Der Stütz- und Tragbügel für Bildschirmgeräte kann jedoch auch als separates Teil vorhanden sein und nachträglich beispielsweise mit Schrauben anmontiert werden.

**Patentansprüche**

1. Stütz- und Tragbügel (1) für Bildschirmgeräte, womit die Neigung der Anzeigeebene zur Horizontalen den Anforderungen des Benutzers entsprechend verstellbar ist, wobei der Stütz- und Tragbügel (1) am Gehäuse schwenkbar gelagert ist und in verschiedenen Positionen durch einen drehbaren Arretierhebel (4) fixierbar ist, und in einer der Positionen zum Tragen des Gerätes verwendet werden kann, **dadurch gekennzeichnet,** daß der Stütz- und Tragbügel (1) an der Rückseite des Bildschirmgerätes (2) angebracht und einseitig auf einer horizontal längs verschiebbaren, nicht verdrehbaren Achse (3) gelagert ist, daß die Achse (3) mit einer schiefen Ebene (5) ausgestattet ist, die mit einer von zwei auf dem Arretierhebel (4) angebrachten schiefen Ebenen (5) in Wirkverbindung steht und die andere schiefen Ebene (5) des Arretierhebels (4) sich an einer gleichartigen, am Gehäuse befindlichen schiefen Ebene abstützt, so daß beim Drehen des Arretierhebels (4) eine auf der Achse (3) angeordnete Rastnase (6) aus einer von mehreren im Stütz- und Tragbügel (1) befindlichen Einkerbungen (7) herausbewegt wird und den Stütz- und Tragbügel (1) freigibt, so daß er in eine andere Raststellung gebracht werden kann, und daß mindestens eine der Raststellungen so ausgebildet ist, daß sie bei einer Verdrehung des Stütz- und Tragbügels (1') um 180° diesen zu einem bequemen Tragegriff für das Bildschirmgerät (2) werden läßt.

2. Stütz- und Tragbügel nach Anspruch 1, **dadurch gekennzeichnet,** daß der Stütz- und Tragbügel (1) an seinem freien, nicht gelagerten Ende so abgewinkelt ist, daß er bei Verwendung als Tragegriff über den Schwerpunkt des Bildschirmgerätes (2) zu liegen kommt.

3. Stütz- und Tragbügel nach Anspruch 1, **dadurch gekennzeichnet,** daß der Stütz- und Tragbügel an seinem freien, nicht gelagerten Ende einen seitlich angeformten Fortsatz (8) hat, der als Tragegriff ausgebildet ist.

4. Stütz- und Tragbügel nach Anspruch 1, dadurch gekennzeichnet, daß an einem Ende der Achse (3) eine Feder (9) vorgesehen ist, die beim Loslassen des Arretierhebels (4) die Achse (3) in die Arretierstellung zurückbewegt.

5. Stütz- und Tragbügel nach Anspruch 1, dadurch gekennzeichnet, daß die Einkerbungen (7) für die Raststellungen im Stütz- und Tragbügel (1) fächerförmig angeordnet sind.

**6.** Stütz- und Tragbügel nach Anspruch 1, dadurch gekennzeichnet, daß in einem der Achslager ein Längsschlitz (10) vorgesehen ist, worin die Rastnase (6) geführt ist, und somit ein Drehen der Achse (3) verhindert wird.

**7.** Stütz- und Tragbügel nach Anspruch 1, dadurch gekennzeichnet, daß die Lagerstellen für die Achse (3) Bestandteil des Bildschirmgeräte-Gehäuses (2) sind.

## Claims

**1.** Support and carry bracket (1) for projection apparatus, whereby the inclination of the display plane relative to the horizontal is adjustable corresponding to the requirements of the user, wherein the support and carry bracket (1) is pivotably mounted at the housing and is fixable in different positions by a rotatable locking lever (4), and in one of the positions can be used for the carrying of the apparatus, characterised thereby that the support and carry bracket (1) is disposed at the rear side of the projection apparatus (2) and is mounted at one end on a longitudinally displaceable and non-rotatable horizontal axle (3), that the axle (3) is equipped with a slanted flat (5), which stands in operative connection with one of two slanted flats disposed on the locking lever (4), and the other slanted flat (5) of the locking lever (4) is supported at a slanted flat likewise disposed at the housing, so that on the rotation of the locking lever (4) a detent nose (6) arranged on the axle (3) is moved out from one of several indentations (7) disposed in the support and carry bracket (1) and frees the support and carry bracket (1), so that it can be brought into another detent setting, and that at least one of the detent settings is so constructed that on a rotation of the support and carry bracket (1') through 180° it allows this to be a convenient handle for the protection apparatus (2).

**2.** Support and carry bracket according to claim 1, characterised thereby that the support and carry bracket (1) is so bent over at its free, unmounted end that on use as handle it comes to lie above the centre of gravity of the projection apparatus (2).

**3.** Support and carrier bracket according to claim 1, characterised thereby that the support and carry bracket has at its free, unmounted end a laterally moulded-on projection (8), which is constructed as handle.

**4.** Support and carry bracket according to claim 1, characterised thereby that provided at one end of the axle (3) is a spring (9), which returns the axle (3) into the locking setting on the release of the locking lever (4).

**5.** Support and carry bracket according to claim 1, characterised thereby that the indentations (7) for the detent settings are arranged fan-shaped in the support and carry bracket (1).

**6.** Support and carry bracket according to claim 1, characterised thereby that provided in one of the axle bearings is a longitudinal slot (10) in which the detent nose (6) is guided and thus a rotation of the axle (3) is presented.

**7.** Support and carry bracket according to claim 1, characterised thereby that the bearing locations for the axle (3) are component of the projection apparatus housing (2).

## Revendications

**1.** Armature (1) de soutien et de support d'un terminal à écran cathodique, grâce à laquelle l'inclinaison du plan d'affichage par rapport à l'horizontale peut être réglée en fonction des exigences de l'utilisateur, l'armature de soutien et de support (1) étant rattachée à pivotement au boîtier et pouvant être fixée en différentes positions par un levier rotatif de verrouillage (4) et pouvant être utilisée dans une des positions pour porter le boîtier, **caractérisée en ce que** l'armature de soutien et de support (1) est d'un côté rattachée à pivotement, à l'arrière du terminal à écran cathodique (2), sur un axe non rotatif (3) déplaçable horizontalement en longueur, de telle sorte que l'axe (3) est doté d'un plan incliné (5) qui coopère avec un de deux plans inclinés (5) disposés sur le levier de verrouillage (4), que l'outre plan incliné (5) du levier de verrouillage (4) s'appuye sur un plan incliné similaire situé sur le boîtier, de sorte que lors de la rotation du levier de verrouillage (4), un tenon cranté (6) disposé sur l'axe (3) est extrait de plusieurs rainures (7) situées dans l'armature de soutien et de support (1) et libère l'armature de soutien et de support (1), de sorte qu'elle peut être amenée dans une autre position des rainures et qu'au moins une des positions des rainures est réalisée de manière telle que lors d'une rotation de 180° de l'armature de soutien et de support (1'), cette position transforme cette dernière en une poignée de manutention du terminal à écran cathodique (2).

2. Armature de soutien et de support selon la revendication 1, **caractérisée en ce que** l'armature de soutien et de support (1) forme un angle à son extrémité libre et non attachée, de sorte que lorsqu'elle est utilisée comme poignée de manutention elle vient reposer contre le centre de gravité du terminal à écran cathodique (2).

3. Armature de soutien et de support selon la revendication 1, **caractérisée en ce que** l'armature de soutien et de support possède à son extrémité libre et non attachée un prolongement latéral (8) qui se présente sous la forme d'une poignée de manutention.

4. Armature de soutien et de support selon la revendication 1, **caractérisée en ce qu'** à une extrémité de l'axe (3) est prévue un ressort (9) qui lors de la libération du levier de verrouillage (4) renvoie l'axe (3) en position de verrouillage.

5. Armature de soutien et de support selon la revendication 1, **caractérisée en ce que** les rainures (7) des positions de rainures de l'armature de soutien et de support (1) sont disposées en forme d'éventail.

6. Armature de soutien et de support selon la revendication 1, **caractérisée en ce que** dans un des paliers de l'axe est prévue une fente longitudinale (10) dans laquelle est guidée le tenon cranté (6) et qu'ainsi une rotation de l'axe (3) est empêchée.

7. Armature de soutien et de support selon la revendication 1, **caractérisée en ce que** les emplacements des paliers de l'axe (3) font partie intégrante du boîtier (2) du terminal à écran cathodique.

Fig. 1

Fig. 2

EP 0 319 656 B1

Fig. 3

EP 0 319 656 B1

Fig. 4

Fig. 5

Fig. 6

Fig. 7